# EUROPEAN PATENT SPECIFICATION

(11) **EP 3 783 358 B1**
(45) Date of publication and mention of the grant of the patent: **15.03.2023**
(21) Application number: 19782219.0
(22) Date of filing: 01.04.2019
(51) Int. Cl.: B01D 15/40, B01D 15/18, B01D 15/38, G01N 30/88, B01J 20/281, B01J 20/285, B01J 20/29, C11B 3/10, G01N 30/02, B01J 20/10, B01J 20/32, C11B 7/00

(54) **METHOD FOR ANALYZING TRIGLYCERIDE, METHOD FOR SEPARATING OIL AND FAT, AND METHOD FOR MANUFACTURING TRIGLYCERIDE**
VERFAHREN ZUR ANALYSE VON TRIGLYCERID, VERFAHREN ZUR TRENNUNG VON ÖL UND FETT UND VERFAHREN ZUR HERSTELLUNG VON TRIGLYCERID
PROCÉDÉ D'ANALYSE DE TRIGLYCÉRIDE, PROCÉDÉ DE SÉPARATION D'HUILE ET DE GRAISSE, ET PROCÉDÉ DE FABRICATION DE TRIGLYCÉRIDE

(30) Priority: 03.04.2018 JP 2018071736
(43) Date of publication of application: 24.02.2021
(73) Proprietor: THE NISSHIN OILLIO GROUP, LTD., Tokyo 104-8285 (JP)
(72) Inventor: MASUDA, Koji, Yokohama-shi, Kanagawa 235-8558 (JP); ABE, Kosuke, Yokohama-shi, Kanagawa 235-8558 (JP); MURANO, Yoshihiro, Yokohama-shi, Kanagawa 235-8558 (JP)
(74) Representative: Dennemeyer & Associates S.A.
(86) International application number: PCT/JP2019/014474
(87) International publication number: WO 2019/194127

(56) References cited:
- JP-A- 2015 175 747
- JP-A- 2019 196 948
- KALPIO MARIKA ET AL: "Enantioselective chromatography in analysis of triacylglycerols common in edible fats and oils", FOOD CHEMISTRY, ELSEVIER LTD, NL, vol. 172, 30 September 2014 (2014-09-30), pages 718-724, XP029094148, ISSN: 0308-8146, DOI: 10.1016/J.FOODCHEM.2014.09.135
- SPEYBROUCK DAVID ET AL: "Preparative supercritical fluid chromatography: A powerful tool for chiral separations", JOURNAL OF CHROMATOGRAPHY A, ELSEVIER, AMSTERDAM, NL, vol. 1467, 26 July 2016 (2016-07-26), pages 33-55, XP029751917, ISSN: 0021-9673, DOI: 10.1016/J.CHROMA.2016.07.050
- IZUMI, YOSHIHIRO et al.: "Development of Lipidomic Analysis Method by Utilizing Supercritical Fluid Extraction and Separation Technologies", Oleoscience, vol. 14, no. 8, 2014, pages 329-335, XP055748008,
- LEE, JAE-WON et al.: "Profiling of regioisomeric triacylglycerols in edible oils by supercritical fluid chromatography/tandem mass spectrometry", Journal of Chromatography B, vol. 966, 2014, pages 193-199, XP055403761, DOI: 10.1016/j.jchromb.2014.01.040
- KLERCK, KATRIJN DE et al.: "Pharmaceutical- enantiomers resolution using immobilized polysaccharide-based chiral stationary phases in supercritical fluid chromatography", Journal of Chromatography A, vol. 1328, 2014, pages 85-97, XP028829332, DOI: 10.1016/j.chroma.2013.12.044
- KLERCK, KATRIJN DE et al.: "Exploratory data analysis as a tool for similarity assessment and clustering of chiral polysaccharide-based systems used to separate pharmaceuticals in supercritical fluid chromatography", Journal of Chromatography A, vol. 1326, 2014, pages 110-124, XP028810363, DOI: 10.1016/j.chroma.2013.12.052
- HAMMAN, CHRIS et al.: "The evaluation of 25 chiral stationary phases and the utilization of sub-2. 0um coated polysaccharide chiral stationary phases via supercritical fluid chromatography", Journal of Chromatography A, vol. 1305, 2013, pages 310-319, XP028689469, DOI: 10.1016/j.chroma.2013.07.046

## Description

### TECHNICAL FIELD

The present invention relates to a method for analyzing triglyceride, a method for sorting oils and fats, and a method for producing triglyceride.

### BACKGROUND ART

Triglyceride, which is a constituent of oil and fat, is a triester of glycerin and a fatty acid and has isomers. These isomers are considered to affect physical properties or nutrition, and are required to be controlled in a process of producing and selling the oil and fat. In general, the composition analysis of triglyceride is performed by using gas chromatography or liquid chromatography, and as the method for analyzing a positional isomer, a silver ion column-HPLC method or the like has been known (Patent Literature 1).

It is also known from JP-A-2015 175747 to analyze and separate isomers of triglycerides using supercritical fluid chromatography (SFC) and a single separation column comprising CHIRALPAK ID-3, in the presence of a specific mobile phase.

### CITATION LIST

### PATENT LITERATURE

Patent Literature 1: JP-A 2013-150625

### SUMMARY OF THE INVENTION

### PROBLEMS TO BE SOLVED BY THE INVENTION

However, there has been a problem that this method takes a long time, and there has been no appropriate analysis method for the optical isomer.

The present invention has been made in view of the above circumstances, and an object of the present invention is to provide a method for analyzing an isomer of triglyceride. Further, an object of the present invention to provide a method for sorting oils and fats having different contents of an isomer of triglyceride. In addition, an object of the present invention to provide a method for producing triglyceride of which an isomer can be fractionated.

### SOLUTION TO THE PROBLEMS

As a result of intensive studies to solve the problems described above, the present inventors have found that with the quantification of triglyceride by supercritical fluid chromatography, the positional isomer of triglyceride can be analyzed rapidly with high accuracy. Further, the present inventors have also found that the optical isomer can also be analyzed by supercritical liquid chromatography with the use of two or more types of chiral columns. From these findings, the present inventors have completed the present invention.

That is, the present invention relates to the following aspects.
[1] A method for analyzing triglyceride, including a step of analyzing an isomer of triglyceride by supercritical fluid chromatography, in which a plurality of types of stationary phases are used in the supercritical liquid chromatography, and at least two stationary phases among the stationary phases have different chiral selectors in each of which one or more chlorines are bound to a polysaccharide derivative.
[2] The method for analyzing triglyceride of [1], in which the stationary phase is obtained by immobilizing or coating an amylose derivative or cellulose derivative being a chiral selector on silica gel being a substrate.
[3] The method for analyzing triglyceride of [1] or [2], in which a plurality of columns are connected in series in the supercritical liquid chromatography, at least two columns are packed with different types of stationary phases, respectively, and the stationary phases have chiral selectors in each of which one or more chlorines are bound to a polysaccharides derivative.
[4] The method for analyzing triglyceride of any one of [1] to [3], in which the different chiral selectors are amylose tris(3-chlorophenylcarbamate), and amylose tris(3,5-dichlorophenylcarbamate).
[5] The method for analyzing triglyceride of any one of [1] to [4], in which an optical isomer, or a positional isomer and an optical isomer, of triglyceride are quantified.
[6] A method for sorting oils and fats, including a step of quantifying oil and fat in accordance with the method of [5], in which the oils and fats are sorted on the basis of quantified triglyceride components.
[7] A method for producing triglyceride, including a step of fractionating an isomer of triglyceride by supercritical fluid chromatography, in which a plurality of types of stationary phases are used in the supercritical liquid chromatography, and at least two stationary phases among the stationary phases have different chiral selectors in each of which one or more chlorines are bound to a polysaccharide derivative.

### EFFECTS OF THE INVENTION

As shown in Examples to be described later, according to the method of the present invention, the positional isomer and/or optical isomer of triglyceride can be measured rapidly and accurately. Moreover, oils and fats can be sorted by using the method of the present invention.

### BRIEF DESCRIPTION OF THE DRAWINGS

Fig. 1 is a chart that illustrates OPO analyzed by supercritical liquid chromatography (packing material of column: amylose tris(3-chlorophenylcarbamate) immobilized to silica gel).
Fig. 2 is a chart that illustrates rac-POO analyzed by supercritical liquid chromatography (packing material of column: amylose tris(3-chlorophenylcarbamate) immobilized to silica gel).
Fig. 3 is a chart that illustrates a 1 : 1 mixture of rac-POO and OPO analyzed by supercritical liquid chromatography (packing material of column: amylose tris(3-chlorophenylcarbamate) immobilized to silica gel).
Fig. 4 is a chart that illustrates a 1 : 1 mixture of rac-POO and OPO analyzed by supercritical liquid chromatography (two columns, packing material 1 of column: amylose tris(3-chlorophenylcarbamate) immobilized to silica gel, and packing material 2 of column: amylose tris(3,5-dichlorophenylcarbamate) immobilized to silica gel).
Fig. 5 is a chart that illustrates a 1 : 1 mixture of rac-POO and OPO analyzed by supercritical liquid chromatography (two columns, packing material 1 of column: amylose tris(3-chlorophenylcarbamate) immobilized to silica gel, and packing material 2 of column: amylose tris(3,5-dimethylphenylcarbamate) immobilized to silica gel).

### DESCRIPTION OF THE EMBODIMENTS

The term "triglyceride" is referred to as a triester of glycerin and a fatty acid. As the fatty acid, a linear or branched fatty acid having 6 to 24 carbon atoms may be used. Further, as the fatty acid, either a saturated fatty acid or an unsaturated fatty acid may be used. As the fatty acid, preferably, a linear saturated fatty acid and/or a linear unsaturated fatty acid, having 8 to 22 carbon atoms are used. These fatty acids are not particularly limited, but as these fatty acids, caprylic acid, capric acid, lauric acid, myristic acid, palmitic acid, stearic acid, behenic acid, palmitoleic acid, oleic acid, linoleic acid, linolenic acid, erucic acid, arachidonic acid, DHA, EPA, and the like can be used.

In the present invention, an isomer of triglyceride can be analyzed or fractionated by supercritical fluid chromatography, and as the isomer, a positional isomer of triglyceride in which the fatty acids at positions 1 and 2 are reversed, and/or a racemic body in which the carbon at position 2 is the optical center can be separated. Therefore, an isomer of triglyceride in which different fatty acids are ester-bonded to three carbons of glycerin, respectively and an isomer of triglyceride in which two different fatty acids are ester-bonded to three carbons of glycerin can be separated. For example, in a case where two oleic acids and one palmitic acid are bound to glycerin, 1,3-dioleoyl-2-palmitoyl-glycerol (hereinafter, abbreviated as "OPO"), 1-palmitoyl-2,3-dioleoyl-sn-glycerol (hereinafter, abbreviated as "sn-POO"), and 1,2-dioleoyl-3-palmitoyl-sn-glycerol (hereinafter, abbreviated as "sn-OOP") are present as the positional isomers. Further, 1-palmitoyl-2,3-dioleoyl-sn-glycerol, and 1,2-dioleoyl-3-palmitoyl-sn-glycerol are the enantiomers (mirror image isomers) (hereinafter, a mixture of the enantiomers is abbreviated as "rac-POO").

The "oil and fat" is not particularly limited, but examples of the oil and fat include a vegetable oil and fat, and an animal oil and fat, and as the oil and fat, a vegetable oil and fat is preferred.

Examples of the vegetable oil and fat include canola oil, palm oil, and a transesterified oil thereof, and as the vegetable oil and fat, a transesterified oil is preferred.

Further, as the oil and fat, an edible oil and fat is preferred.

The present embodiment is not particularly limited, but glyceride of a naturally-derived animal or vegetable oil or a synthetic oil can be used for analysis.

### <Method for analyzing triglyceride>

The method for analyzing triglyceride in the present embodiment includes a step of analyzing an isomer of triglyceride by supercritical fluid chromatography.

In this regard, the expression "supercritical fluid chromatography" is a type of column chromatography also called "SFC", and is referred to as one that uses a supercritical fluid as the mobile phase. In the supercritical fluid chromatography, with the use of a subcritical fluid or supercritical fluid that has characteristics of low viscosity and high diffusivity as the mobile phase, the resolution and detectability can be improved as compared with those in liquid chromatography (HPLC) that uses a liquid as the mobile phase.

The "mobile phase" of the supercritical fluid chromatography is not particularly limited, but as the mobile phase, for example, carbon dioxide in a liquefied state, a subcritical state, or a supercritical state can be used. As the mobile phase, these can be used alone, but in addition to this, it is preferred to use an organic solvent (modifier) in combination. This is because the elution force and retention strength of triglyceride can be adjusted by changing the concentration of the modifier. The modifier is not particularly limited, but as the modifier, an organic solvent such as methanol, ethanol, isopropanol, acetonitrile, or dichloromethane can be used.

As the "stationary phase" of the supercritical fluid chromatography, at least two stationary phases having different chiral selectors in each of which one or more chlorines are bound to a polysaccharide derivative are used. For example, as the stationary phase, a stationary phase in which an amylose derivative or cellulose derivative being a chiral selector is immobilized or coated on silica gel being a substrate can be used. Further, as the stationary phase, a stationary phase having one selected from amylose tris(3-chlorophenylcarbamate), amylose tris(3,5-dichlorophenylcarbamate), amylose tris(3-chloro-4-methylphenylcarbamate), amylose tris(3-chloro-5-methylphenylcarbamate), amylose tris((S)-a-methylbenzylcarbamate), and the like as the chiral selector is preferred. A combination of stationary phases that have amylose tris(3-chlorophenylcarbamate) and amylose tris(3,5-dichlorophenylcarbamate), respectively as the chiral selectors is more preferred.

In the present embodiment, different stationary phases can be used by packing a single column or separate columns with the stationary phases. In general, a column packed with a single stationary phase is available on the market, and therefore, it is preferred to use such columns packed with different stationary phases by connecting the columns in series.

In the present embodiment, a stationary phase and a column other than those described above may be additionally used.

The "detector" of the supercritical fluid chromatography is not particularly limited, but as the detector, for example, an ultraviolet/visible absorbance detector, a diode array detector, a mass spectrometer, a circular dichroism detector, or the like can be used.

As the conditions of the supercritical fluid chromatography, conditions used for the analysis of oil and fat can be adopted without any particular limitation.

In a case of a composition containing a component other than oil and fat, prior to the supercritical fluid chromatography, it is preferred to perform pretreatment such as extraction.

For example, the extraction is not particularly limited to this, but with the use of an organic solvent that is hardly soluble in water, for example, ether, hexane, heptane, octane, petroleum ether, benzene, toluene, xylene, dichloromethane, or the like, a component soluble in an organic solvent can be extracted. After that, it is preferred to use an organic solvent having a boiling point of 100°C or less so that the extracted component can be concentrated.

Further, after the extraction, in a case where there are alkalis/acids in the organic phase, water washing may be performed in order to remove such alkalis/acids.

The extract can be appropriately concentrated. The concentration method is not particularly limited, but as the concentration method, a method in which the extract is dried with a desiccant such as anhydrous sodium sulfate, calcium chloride, or a molecular sieve, and then the organic solvent is distilled can be included.

In the present embodiment, isomers of a variety of triglycerides contained in oil and fat can be analyzed. With the analysis, the presence or absence of an optical isomer, the presence or absence of a positional isomer, or the presence or absence a positional isomer and an optical isomer, of triglyceride in a sample can be confirmed, and the large or small of the relative amount between isomers can also be confirmed. In addition, usually, by a method using an external standard or internal standard, which is performed in quantitative analysis, the optical isomer, the positional isomer, or the positional isomer and optical isomer, of triglyceride in a sample can be quantified.

In this regard, an example of the triglyceride includes triglyceride that has a fatty acid having 6 to 24 carbon atoms as the constituent fatty acid of triglyceride. As the fatty acid having 6 to 24 carbon atoms, a saturated and/or unsaturated linear fatty acid is preferred, and caproic acid, caprylic acid, capric acid, lauric acid, myristic acid, palmitic acid, palmitoleic acid, stearic acid, linoleic acid, linolenic acid, behenic acid, arachidonic acid, erucic acid, DHA, EPA, or the like is more preferred. Analysis of the triglyceride that includes two kinds of constituent fatty acids is most preferred, and for example, as the triglyceride, triglyceride of which the constituent fatty acids are two palmitic acids and one oleic acid, and/or two oleic acids and one palmitic acid, is most preferred.

### <Method for sorting oils and fats>

In the method for sorting oils and fats of the present invention, a step of quantifying oil and fat in accordance with the <method for analyzing triglyceride> is included, and the oils and fats are sorted on the basis of quantified triglyceride components.

In the present invention, the step of quantification is not particularly limited, but if the oil and fat is a transesterified oil, the step of quantification may be performed after the transesterification, and may be performed before the purification step, or in the course of the purification step.

As the oil and fat, in addition to animal and vegetable oils, a transesterified oil obtained by regioselectively transesterifying the animal or vegetable oil can be used. For example, in a case where selective transesterification is performed at positions 1 and 3 with an enzyme, specific fatty acids can be introduced at the positions 1 and 3, but depending on the selectivity of the enzyme, a specific fatty acid may be introduced at position 2. For example, in a case where selective transesterification of palmitic acid is performed at positions 1 and 3 in triolein with an enzyme, in addition to rac-POO (mixture of mirror image isomers) being a target substance, OPO being a positional isomer, 1,3-dipalmitoyl-2-oleoyl-glycerol, 1,2-dipalmitoyl-3-oleoyl-sn-glycerol, and 1-oleoyl-2,3-dipalmitoyl-sn-glycerol, which are side reaction products, and the like are produced. On the basis of the <method for analyzing triglyceride>, a product containing a large amount of the target substance can be sorted.

### <Method for producing triglyceride>

The method for producing triglyceride in the present embodiment includes a step of fractionating an isomer of triglyceride by supercritical fluid chromatography. In the supercritical liquid chromatography, multiple types of stationary phases are used, and at least two stationary phases among these stationary phases have different chiral selectors in each of which one or more chlorines are bound to a polysaccharide derivative. Triglyceride is fractionated by supercritical liquid chromatography in fraction having a peak of an isomer. The fractionated fraction is washed with water and dried as needed, and in a case where a solvent is used, the solvent is distilled off. In addition, the conditions and the like of the supercritical liquid chromatography are as described in detail in the above <method for analyzing triglyceride>.

### Examples

Hereinafter, the present invention will be described in more detail with reference to Examples, but the present invention is not limited to the following Examples.

### Example 1: Analysis of triglyceride

### (Sample preparation)

Standard substance: 10 ppm by mass of 1,3-dioleoyl-2-palmitoyl-glycerol (OPO: trade name "1,3-Olein-2-Palmitin", manufactured by Larodan) was used as an acetone solution (OPO acetone solution). 10 ppm by mass of a mixture of 1-palmitoyl-2,3-dioleoyl-sn-glycerol (sn-POO) and 1,2-dioleoyl-3-palmitoyl-sn-glycerol (sn-OOP) (rac-POO: trade name "1,2-Olein-3-Palmitin (rac)", manufactured by Larodan) was used as an acetone solution (rac-POO acetone solution). The OPO acetone solution and the rac-POO acetone solution were mixed in a ratio of 1 : 1 (OPO + rac-POO acetone solution).

### (Supercritical fluid chromatography operation)

Each acetone solution was supplied to a supercritical fluid chromatography device under the following conditions.

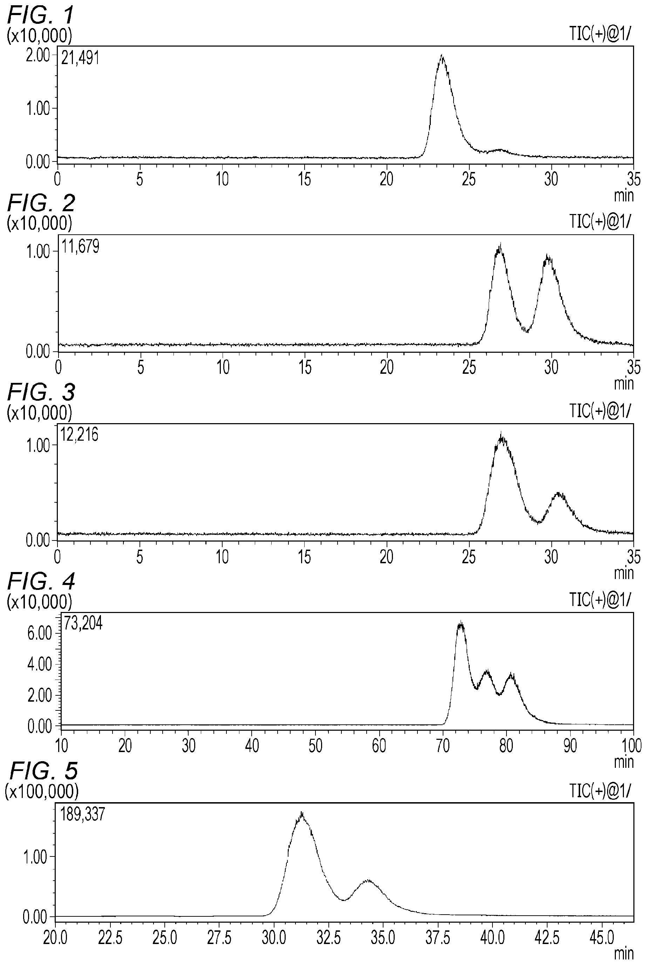

The results (chart) obtained by analyzing the OPO acetone solution under the following supercritical liquid chromatography conditions (column (1), packing material of column: amylose tris(3-chlorophenylcarbamate) immobilized to silica gel) are shown in Fig. 1.

The results (chart) obtained by analyzing the rac-POO acetone solution under the following supercritical liquid chromatography conditions (column (1), packing material of column: amylose tris(3-chlorophenylcarbamate) immobilized to silica gel) are shown in Fig. 2.

The results (chart) obtained by analyzing the OPO + rac-POO acetone solution under the following supercritical liquid chromatography conditions (column (1), packing material of column: amylose tris(3-chlorophenylcarbamate) immobilized to silica gel) are shown in Fig. 3.

The results (chart) obtained by analyzing the OPO + rac-POO acetone solution under the following supercritical liquid chromatography conditions (column (2), two columns, packing material 1 of column: amylose tris(3-chlorophenylcarbamate) immobilized to silica gel, and packing material 2 of column: amylose tris(3,5-dichlorophenylcarbamate) immobilized to silica gel) are shown in Fig. 4.

The results (chart) obtained by analyzing the OPO + rac-POO acetone solution under the following supercritical liquid chromatography conditions (column (2), two columns, packing material 1 of column: amylose tris(3-chlorophenylcarbamate) immobilized to silica gel, and packing material 2 of column: amylose tris(3,5-dimethylphenylcarbamate) immobilized to silica gel) are shown in Fig. 5.

### (Supercritical fluid chromatography conditions)

Supercritical fluid chromatography device: Nexera UC (manufactured by Shimadzu Corporation)
Column (1): column A
Column (2): column A and column B connected in series
Column (3): column A and column C connected in series
Mobile phase: supercritical fluid CO2 (flow rate: 1.2 mL/min)
Modifier: acetonitrile (flow rate: 0.18 mL/min)
Make-up solvent: methanol containing 0.1% ammonium formate (flow rate: 0.1 mL/min)
Detector: tandem quadrupole MS
Injection volume: 1 µL

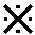 Column

Column A: CHIRALPAK ID-3/SFC, length 150 mm × inner diameter 4.6 mm, and particle diameter 3 µm (amylose tris(3-chlorophenylcarbamate) immobilized to silica gel), manufactured by Daicel Corporation
Column B: CHIRALPAK IE-3/SFC, length 150 mm × inner diameter 4.6 mm, and particle diameter 3 µm (amylose tris(3,5-dichlorophenylcarbamate) immobilized to silica gel), manufactured by Daicel Corporation
Column C: CHIRALPAK IA-3/SFC, length 150 mm × inner diameter 4.6 mm, and particle diameter 3 µm (amylose tris(3,5-dimethylphenylcarbamate) immobilized to silica gel), manufactured by Daicel Corporation

### (Mass spectrometry conditions)

Mass spectrometer: liquid chromatography mass spectrometer LCMS-8050 (manufactured by Shimadzu Corporation)
Ionization mode: ESI
Interface temperature: 400°C
Heating gas flow rate: 12 L/min
Nebulizer gas flow rate: 2.5 L/min
Desolvation gas temperature: 250°C
Heat block temperature: 400°C
Dry in gas flow rate: 5 L/min

In Figs. 3 and 5, it can be found that there are only two peaks and the positional isomer and the mirror image isomer are not sufficiently separated.

On the other hand, in Fig. 4, three peaks of OPO, sn-POO, and sn-OOP are confirmed, and it has been found that the positional isomer and the mirror image isomer are separated. This indicates that by creating the calibration curve using the standard substance that was used in the present Examples as an external standard, content of a sample in which contents of the positional isomer and the mirror image isomer are unknown can be quantified.

### INDUSTRIAL APPLICABILITY

The present invention can be utilized in the field of oil and fat.

## Claims

1. A method for analyzing triglyceride, comprising
a step of analyzing an isomer of triglyceride by supercritical fluid chromatography, wherein
a plurality of types of stationary phases are used in the supercritical liquid chromatography, and
at least two stationary phases among the stationary phases have different chiral selectors in each of which one or more chlorines are bound to a polysaccharide derivative.

2. The method for analyzing triglyceride according to claim 1, wherein
the stationary phase is obtained by immobilizing or coating an amylose derivative or cellulose derivative being a chiral selector on silica gel being a substrate.

3. The method for analyzing triglyceride according to claim 1 or 2, wherein
a plurality of columns are connected in series in the supercritical liquid chromatography,
at least two columns are packed with different types of stationary phases, respectively, and
the stationary phases have chiral selectors in each of which one or more chlorines are bound to a polysaccharides derivative.

4. The method for analyzing triglyceride according to any one of claims 1 to 3, wherein
the different chiral selectors are amylose tris(3-chlorophenylcarbamate), and amylose tris(3,5-dichlorophenylcarbamate).

5. The method for analyzing triglyceride according to any one of claims 1 to 4, wherein
an optical isomer, or a positional isomer and an optical isomer, of triglyceride are quantified.

6. A method for sorting oils and fats, comprising
a step of quantifying oil and fat in accordance with the method according to claim 5, wherein
the oils and fats are sorted on the basis of quantified triglyceride components.

7. A method for producing triglyceride, comprising
a step of fractionating an isomer of triglyceride by supercritical fluid chromatography, wherein
a plurality of types of stationary phases are used in the supercritical liquid chromatography, and
at least two stationary phases among the stationary phases have different chiral selectors in each of which one or more chlorines are bound to a polysaccharide derivative.

## Patentansprüche

1. Verfahren zur Analyse von Triglycerid, umfassend
einen Schritt des Analysierens eines Triglycerid-Isomers durch überkritische Flüssigkeitschromatographie, wobei
in der überkritischen Flüssigkeitschromatographie eine Vielzahl von Arten stationärer Phasen verwendet wird und
mindestens zwei stationäre Phasen der stationären Phasen unterschiedliche chirale Selektoren aufweisen, in denen jeweils ein oder mehrere Chloratome an ein Polysaccharidderivat gebunden sind.

2. Verfahren zur Analyse von Triglycerid nach Anspruch 1,
wobei die stationäre Phase durch Immobilisieren oder Beschichten eines Amylosederivats oder Cellulosederivats, das einen chiralen Selektor darstellt, an Kieselgel, das ein Substrat darstellt, erhalten wird.

3. Verfahren zur Analyse von Triglycerid nach Anspruch 1 oder 2, wobei
in der überkritischen Flüssigkeitschromatographie eine Vielzahl von Säulen in Reihe geschaltet sind,
mindestens zwei Säulen jeweils mit unterschiedlichen Arten von stationären Phasen gepackt sind und
die stationären Phasen chirale Selektoren aufweisen, in denen jeweils ein oder mehrere Chloratome an ein Polysaccharidderivat gebunden sind.

4. Verfahren zur Analyse von Triglycerid nach einem der Ansprüche 1 bis 3, wobei
die unterschiedlichen chiralen Selektoren Amylose-tris(3-chlorphenylcarbamat) und Amylose-tris(3,5-dichlorphenylcarbamat) sind.

5. Verfahren zur Analyse von Triglycerid nach einem der Ansprüche 1 bis 4, wobei
ein optisches Isomer, oder ein Positionsisomer und ein optisches Isomer von Triglycerid quantifiziert werden.

6. Verfahren zur Sortierung von Ölen und Fetten, umfassend
einen Schritt des Quantifizierens von Öl und Fett gemäß dem Verfahren nach Anspruch 5, wobei
die Öle und Fette auf der Grundlage der quantifizierten Triglyceridkomponenten sortiert werden.

7. Verfahren zur Herstellung von Triglycerid, umfassend
einen Schritt des Fraktionierens eines Triglycerid-Isomers durch überkritische Flüssigkeitschromatographie, wobei
in der überkritischen Flüssigkeitschromatographie eine Vielzahl von Arten stationärer Phasen verwendet wird und
mindestens zwei stationäre Phasen der stationären Phasen unterschiedliche chirale Selektoren aufweisen, in denen jeweils ein oder mehrere Chloratome an ein Polysaccharidderivat gebunden sind.

## Revendications

1. Procédé d'analyse de triglycéride, comprenant
une étape d'analyse d'un isomère de triglycéride par chromatographie en phase supercritique, dans laquelle
une pluralité de types de phases stationnaires sont utilisés dans la chromatographie en phase supercritique, et
au moins deux phases stationnaires parmi les phases stationnaires ont des sélecteurs chiraux différents dans chacun desquels un ou plusieurs chlores sont liés à un dérivé de polysaccharide.

2. Procédé d'analyse de triglycéride selon la revendication 1,
dans lequel la phase stationnaire est obtenue par immobilisation ou revêtement d'un dérivé d'amylose ou d'un dérivé de cellulose qui est un sélecteur chiral sur du gel de silice qui est un substrat.

3. Procédé d'analyse de triglycéride selon la revendication 1 ou 2, dans lequel
une pluralité de colonnes sont reliées en série dans la chromatographie en phase supercritique,
au moins deux colonnes sont remplies de différents types de phases stationnaires, respectivement, et
les phases stationnaires ont des sélecteurs chiraux dans chacun desquels un ou plusieurs chlores sont liés à un dérivé de polysaccharides.

4. Procédé d'analyse de triglycéride selon l'une quelconque des revendications 1 à 3, dans lequel
les différents sélecteurs chiraux sont l'amylose tris(3-chlorophénylcarbamate), et l'amylose tris(3,5-dichlorophénylcarbamate).

5. Procédé d'analyse de triglycéride selon l'une quelconque des revendications 1 à 4, dans lequel
un isomère optique, ou un isomère de position et un isomère optique, de triglycéride sont quantifiés.

6. Procédé de tri d'huiles et de graisses, comprenant
une étape de quantification d'huile et de graisse conformément au procédé selon la revendication 5, dans lequel
les huiles et les graisses sont triées sur la base de constituants de triglycéride quantifiés.

7. Procédé de production de triglycéride, comprenant
une étape de fractionnement d'un isomère de triglycéride par chromatographie en phase supercritique, dans laquelle
une pluralité de types de phases stationnaires sont utilisés dans la chromatographie en phase supercritique, et
au moins deux phases stationnaires parmi les phases stationnaires ont des sélecteurs chiraux différents dans chacun desquels un ou plusieurs chlores sont liés à un dérivé de polysaccharide.
